# EUROPÄISCHE PATENTSCHRIFT

(11) **EP 1 180 392 B1**
(45) Veröffentlichungstag und Bekanntmachung des Hinweises auf die Patenterteilung: **30.06.2004**
(21) Anmeldenummer: 01117813.4
(22) Anmeldetag: 21.07.2001
(51) Int. Cl.: B01D 71/02, B01D 53/22, C01B 3/50, B01D 69/10, B01D 67/00, H01M 4/94

(54) **Geträgerte Metallmembran, Verfahren zu ihrer Herstellung und Verwendung**
Supported metal membrane, method for the production and the use thereof
Membrane métallique supporté, son procédé de fabrication er son utilisation

(30) Priorität: 12.08.2000 DE 10039596
(43) Veröffentlichungstag der Anmeldung: 20.02.2002
(73) Patentinhaber: Umicore AG & Co. KG, 63457 Hanau-Wolfgang (DE)
(72) Erfinder: Drost, Ernst, Dr., 63755 Alzenau (DE); Kuhn, Werner, 63517 Rodenbach (DE); Roos, Meike, Dr., 63599 Biebergemünd (DE); Wieland, Stefan, Dr., 63069 Offenbach (DE); Kempf, Bernd, Dr., 63839 Kleinwallstadt (DE)
(74) Vertreter: Stellbrink, Axel

(56) Entgegenhaltungen:
- WO-A-89/04556
- WO-A-99/33545
- GB-A- 1 208 962
- US-A- 3 505 180
- US-A- 3 533 863
- US-A- 5 734 092
- US-A- 5 904 754
- US-A- 5 958 091
- SH.UEMIYA ET AL: "hydrogen permeable palladium-silver alloy membrane supported on porous ceramics" JOURNAL OF MEMBRANE SCIENCE, Bd. 56, Nr. 3, März 1991 (1991-03), Seite 315-325 XP000176959 amsterdam,nl

## Beschreibung

Die Erfindung betrifft eine geträgerte Metallmembran, welche eine Metallmembran auf einem porösen Membranträger enthält, sowie ein Verfahren zu ihrer Herstellung und ihre Verwendung. Geträgerte Metallmembranen dieser Art werden für die Trennung von Gasgemischen eingesetzt, insbesondere für die Abtrennung von Wasserstoff aus einem Reformatgas zur Versorgung von Brennstoffzellen mit dem nötigen Brenngas.

Für diesen Zweck werden gewöhnlich Palladium- oder Palladiumlegierungsmembranen auf porösen oder nicht porösen Trägern ebenso eingesetzt wie kompakte Palladium- oder Palladiumlegierungsmembranen. Als nicht poröse Träger werden unter anderem Folien aus für Wasserstoff durchlässigen Metallen verwendet. Die Permeationsfähigkeit der Membranen für Wasserstoff steigt mit der Temperatur an. Die typischen Betriebstemperaturen liegen deshalb zwischen 300 und 600 °C.

T. S. Moss und R. C. Dye [Proc.-Natl. Hydrogen Assoc. Annu. U.S. Hydrogen Meet., 8th (1997), 357-365] und T. S. Moss, N. M. Peachey, R. C. Snow und R. C. Dye [Int. J. Hydrogen Energy 23(2), (1998), 99-106 ISSN: 0360-3199] beschreiben die Herstellung und Verwendung einer Membran, die durch beidseitiges Aufbringen von Pd oder PdAg durch Kathodenzerstäubung auf eine Folie aus einem Metall der 5. Nebengruppe erhalten wird. Die Dicken der beidseitig aufgebrachten Schichten können variiert werden, so daß ein asymmetrisches Bauteil entsteht (zum Beispiel: 0,1µm Pd / 40µm V / 0,5 µm Pd). Permeationsversuche belegen eine zwanzigmal höhere Wasserstoffpermeation im Vergleich zu selbsttragenden Pd-Membranen. Entsprechend eignet sich die beschriebene Membran für den Einsatz in einem PEM-Brennstoffzellen-System anstelle der herkömmlichen katalytischen Gasreinigungsstufen (Wassergasshift-Reaktion und präferentielle Oxidation von CO).

Die GB 1 292 025 beschreibt die Verwendung von Eisen, Vanadium, Tantal, Nickel, Niob oder Legierungen davon als nicht poröse Träger für eine unzusammenhängende, beziehungsweise poröse, Palladium(-legierungs)-schicht. Die Palladiumschicht wird durch Druck-, Sprüh- oder galvanische Verfahren in einer Dicke von etwa 0,6 mm auf den Träger mit einer Dicke von 12,7 mm aufgebracht. Anschließend wird die Dicke des so erzeugten Verbundes durch Rollen auf 0,04 bis 0,01 mm vermindert.

Gemäß DE 197 38 513 C1 lassen sich durch abwechselnde, galvanische Abscheidung von Palladium und einem Legierungsmetall aus der 8. oder 1. Nebengruppe des Periodensystems der Elemente auf einem nicht näher spezifizierten metallischen Träger besonders dünne Wasserstofftrennmembranen (Schichtdicken kleiner 20 µm) herstellen. Zur Überführung der alternierenden Schichten in eine homogene Legierung kann an die galvanische Abscheidung eine geeignete Temperaturbehandlung angeschlossen werden.

Als poröse Träger für Palladium(-legierungs)-Membranen kommen sowohl metallische als auch keramische Materialien in Frage. Dabei kann gemäß der JP 05078810 (WPIDS 1993-140642) Palladium beispielsweise durch Plasmasprühverfahren auf einen porösen Träger aufgebracht werden.

Nach Y. Lin, G. Lee und M. Rei [Catal. Today 44 (1998) 343-349 und Int. J. of Hydrogen Energy 25 (2000) 211-219] kann eine defektfreie Palladiummembran (Schichtdicke 20-25µm) auf einem rohrförmigen Träger aus porösem Edelstahl 316L in einem stromlosen Beschichtungsverfahren hergestellt und als Bauteil in einem Dampfreformierungsreaktor integriert werden. Bei Arbeitstemperaturen von 300 bis 400 °C wird ein gereinigtes Reformat mit 95 Vol.-% H₂ erhalten. Der optimale Arbeitstemperaturbereich ist allerdings streng begrenzt, da unterhalb von 300 °C eine durch den Wasserstoff bedingte Versprödung der Palladiummembran einsetzt, während oberhalb von 400 bis 450 °C Legierungsbestandteile des Edelstahlträgers in die Palladiumschicht diffundieren und zu einer Verschlechterung der Permeationseigenschaften führen.

Bevorzugt werden stromlose Beschichtungsverfahren für die Beschichtung keramischer Träger verwendet. So wird von E. Kikuchi [Catal. Today 56 (2000) 97-101] die CVD-Beschichtung einer asymmetrischen, porösen Keramik mit Palladium beschrieben, die in einem Methan-Dampfreformierungsreaktor zur Abtrennung des Wasserstoffs aus dem Reformat eingesetzt wird. Die minimale Schichtdicke beträgt 4,5 µm. Bei dünneren Schichten kann die Gasdichtheit der Schicht nicht mehr gewährleistet werden. Neben der CVD-Beschichtung mit reinem Pd ist auch die Beschichtung mit Palladiumlegierungen möglich, wobei die Legierung mit Silber eine Versprödung der Palladiummembran verhindert und die Wasserstoffpermeabilität erhöht.

Neben reinen Wasserstofftrennmembranen werden für die Anwendungen in Brennstoffzellensystemen auch immer wieder Membranen beschrieben, die zusätzlich zur Wasserstofftrennschicht (Palladium) mit einer reaktiven Schicht versehen sind. So kann der poröse Träger einer Palladium(-legierungs)-membran beispielsweise auf der Seite, die nicht mit Pd beschichtet ist, mit einem Verbrennungskatalysator überzogen werden. Die bei der Verbrennung an der reaktiven Seite freigesetzte Wärme dient dann gleichzeitig dem Erhalt der Betriebstemperatur der Wasserstofftrennmembran (EP 0924162 A1). Ein solches Bauteil kann dann hinter einem Reformer in den Reformierprozess integriert oder direkt in den Reformer eingebaut werden (EP 0924161 A1, EP 0924163 A1).

Darüber hinaus sind nicht nur Palladiummembranen zur Wasserstoffabtennung im Brennstoffzellenbereich einsetzbar. Die EP 0945174 A1 stellt ein Konzept zur Verwendung universell aufgebauter Schichtmembranen vor, die sowohl feinporöse, abtrennselektive Kunststoffe und/oder mehrere Keramikschichten und/oder Schichten aus einem abtrennselektiven Metall (vorzugsweise aus der 4., 5. oder 8. Nebengruppe) enthalten können, wobei diese Schichten auf einen porösen Träger (Glas, Keramik, Metallschaum, Kohle oder poröser Kunststoff) aufgebracht sind.

Ziel der Entwicklung von Metallmembranen für die Abtrennung von Wasserstoff aus Gasgemischen ist es, hohe Permeationsraten für Wasserstoff zu erhalten. Hierzu muss die Metallmembran so dünn wie möglich ausgebildet werden, ohne daß dabei Undichtigkeiten in Form von Löchern auftreten. Solche Membranen sind nur noch in geträgerter Form zu verarbeiten. Damit der Membranträger die Permeation von Wasserstoff so gering wie möglich beeinflusst, muss er eine hohe Porosität aufweisen. Daher besteht bei den bekannten Herstellverfahren für geträgerte Membranen die Schwierigkeit; eine defektfreie Membran auf einem porösen Träger abzuscheiden. Hierbei treten zwei Probleme auf. Zum einen können die beschriebenen Verfahren zur Abscheidung von zum Beispiel Palladium oder einer Palladiumlegierung erst ab einer bestimmten Schichtdicke eine relativ defektfreie Membranschicht garantieren. Diese minimale Schichtdicke liegt bei etwa 4 bis 5 µm. Zum anderen bedingen die verwendeten Beschichtungstechniken zur Auftragung der Membranschicht auf die porösen Membranträger, daß die mittleren Porendurchmesser des Membranträgers einen bestimmten Wert nicht überschreiten dürfen, da es sonst unmöglich wäre, zusammenhängende und defektfreie Beschichtungen aufzubringen. Die Porengröße der bekannten Membranträgermaterialien, wie poröse Keramiken oder poröse Metallträger, liegen daher unterhalb von 0,1 µm. Dies hat zur Folge, daß der Strömungswiderstand des Gases durch die Poren nicht in einem wünschenswerte Maße verringert werden kann.

Die WO 89/04556 beschreibt ein elektrochemisches Verfahren zur Herstellung einer porenfreien, von einem porösen Metallkörper gestützten Membran auf der Basis von Palladium. Gemäß dem Verfahren wird eine porenfreie Palladium(-silber)-membran auf einem porösen, metallischen Träger dadurch erzeugt, daß eine Metallegierungsfolie (vorzugsweise Messing) einseitig galvanisch mit Palladium oder Palladium/Silber beschichtet wird (Dicke der Palladiumschicht: ca. 1µm). Die Porosität des Trägers wird nachträglich durch Herauslösen der unedlen Komponente aus der Messingfolie erzeugt. Das Herauslösen erfolgt elektrochemisch, wobei in einem zyklischen Verfahren zunächst beide Trägerkomponenten in Lösung gebracht werden, sich jedoch die edlere Komponente direkt wieder auf der Palladiumschicht abscheidet (elektrochemische Umkristallisation). Die weniger edle Komponente der folienförmigen Legierung geht dabei praktisch quantitativ in Lösung, so daß ein poröser Metallkörper, vorzugsweise ein poröser Kupferkörper, als Träger für die Palladium/Silber-Membran zurückbleibt.

Das Verfahren gemäß der WO 89/04556 hat den Nachteil, daß die als Träger dienende Messingfolie praktisch komplett aufgelöst und durch elektrochemische Umkristallisation wieder neu aufgebaut werden muss. Dadurch wird der Verbund zwischen der Palladiumschicht und der Trägerfolie zerstört. Die mechanische Festigkeit der umkristallisierten Folie ist gering und ihre Porosität undefiniert.

Aufgabe der vorliegenden Erfindung ist es, eine geträgerte Metallmembran für die Wasserstoffabtrennung aus Gasgemischen anzugeben, die nach einem einfachen und kostengünstigen Verfahren hergestellt werden kann. Ein weiterer Gegenstand der Erfindung sind geträgerte Metallmembranen, deren Membranträger eine bisher nicht realisierbare, hohe Porosität (mittlere Porengröße und Porenvolumen) aufweisen: Weiterhin sind Metallverbundmembranen Gegenstand der vorliegenden Erfindung, bei denen die mittlere Porengröße der Membranträger größer ist als die Dicke der Metallmembran.

Diese Aufgabe wird durch eine geträgerte Metallmembran gemäß Anspruch1 gelöst.

Im Rahmen der vorliegenden Erfindung wird zwischen der Trägerfläche des Membranträgers und seinen Kontaktflächen unterschieden. Die Trägerfläche umfaßt die gesamte für die Beschichtung mit der Metallmembran zur Verfügung stehende Oberfläche des Membranträgers,

Vor dem Aufbringen der Metallmembran empfiehlt es sich die Trägerfläche des Membranträgers durch geeignete Maßnahmen, wie zum Beispiel Schleifen und Polieren, zu glätten und insbesondere die späteren Kontaktflächen zur Metallmembran freizulegen und zu reinigen. Die dadurch erzeugte hohe Oberflächenqualität überträgt sich auf die aufzubringende Metallmembran, so daß die fertige, geträgerte Metallmembran eine sehr ebene Struktur mit gleichmäßiger Schichtdicke aufweist.

Eine Möglichkeit zur Herstellung der geträgerten Metallmembran besteht darin, daß ein zunächst nicht poröser Membranträger ausgewählt wird, der eine potentielle Porosität aufweist. Hiermit soll ausgedrückt werden, daß der Membranträger eine inhomogene Struktur aufweist, wobei die späteren Poren durch eine Hilfssubstanz gefüllt sind, die erst nach dem Aufbringen der Metallmembran auf die dafür vorgesehene Trägerfläche des Membranträgers entfernt wird.

In einfacher Weise läßt sich das dadurch realisieren, daß der Membranträger aus einer mehrphasigen, eutektischen Legierung besteht und die Hilfssubstanz durch die in Phasendomänen angeordnete unedlere (elektronegativere) Phase gebildet wird, die nach Aufbringen der Metallmembran unter Bildung der Poren elektrochemisch herausgelöst wird. Besonders eignet sich hierfür die eutektische Legierung AgCu, die aus einer Cureichen und einer Ag-reichen Legierungsphase besteht. Die Cu-reiche Phase ist elektronegativer und kann selektiv auf elektrochemischen Wege aus dem Membranträger unter Ausbildung der gewünschten Porosität herausgelöst werden. Die Ag-reiche Phase bleibt dabei nahezu unberührt. Während gemäß der WO 89/04556 der Membranträger vollständig aufgelöst und umgebaut wird, bleibt gemäß der vorliegenden Erfindung ein starres Gerüst aus der Ag-reichen Legierungsphase erhalten - mit entsprechend positiven Auswirkungen auf die Stabilität des Membranträgers.

Bevorzugt beträgt der Kupfergehalt der eutektischen Legierung zwischen 20 und 80 Gew.-%, bezogen auf das Gesamtgewicht der Legierung. Durch geeignete Wärmebehandlung des Trägers bei 400 bis 750 °C vor oder nach dem Aufbringen der Metallmembran kann seine Gefügestruktur und damit seine spätere Porosität in vorteilhafter Weise beeinflußt werden.

Die Herstellung einer erfindungsgemäßen, geträgerten Metallmembran unter Verwendung eines Membranträgers aus einer eutektischen Legierung umfaßt also die folgenden Verfahrensschritte:
a) Reinigen der Trägerfläche des Membranträgers,
b) Aufbringen der Metallmembran auf die Trägerfläche,
c) Behandeln des Verbundes aus Metallmembran und Membranträger bei Temperaturen zwischen 300 und 700°C und
d) elektrochemisches Herauslösen der unedleren Phase des Membranträgers.

Bevorzugt wird die erfindungsgemäße, geträgerte Metallmembran als Gastrennmembran für die Wasserstoffabtrennung aus Gasgemischen eingesetzt. In diesem Fall wird die Metallmembran bevorzugt aus Palladium oder aus einer Palladiumlegierung hergestellt, beispielsweise aus PdAg23, PdCu40 oder PdY10.

Für die Verwendung als Gastrennmembran ist eine geringe Dicke der Metallmembran gefordert, um eine möglichst hohe Permeabilität für das gewünschte Gas zu gewährleisten. Gastrennmembranen aus Palladium oder Palladiumlegierungen mit einer Dicke von mehr als 20 µm sind für die Abtrennung von Wasserstoff aus Gasgemischen wegen der hohen Edelmetallkosten und der geringen Permeationsleistung nur noch von geringem Interesse. Membranen mit einer Dicke von weniger als 0,3 µm können vermehrt Defekte aufweisen. Außerdem steigt bei diesen geringen Dicken auch die Permeabilität für unerwünschte Gase. Auf Grund beider Effekte sinkt die Trennleistung der Membran bei Membrandicken unterhalb von 0,3 µm auf nicht mehr tolerierbare Werte. Bevorzugt weist die Metallmembran deshalb eine Dicke zwischen 0,3 und 5, bevorzugt zwischen 0,5 und 3 µm auf.

Der poröse, metallische Membranträger dient zur Stützung der dünnen Metallmembran, wobei der Membranträger die Permeationsfähigkeit der Metallmembran möglichst wenig gegenüber einer gleichdicken, freitragenden Metallmembran verschlechtern sollte. Andererseits ist eine gewisse Mindestdicke des Membranträgers erforderlich, um die notwendige mechanische Stabilität der geträgerten Membran zu gewährleisten. Die Dicke des Membranträgers sollte daher weniger als 100 µm betragen und 20 µm nicht unterschreiten. Bevorzugt werden Dicken des Membranträgers zwischen 50 und 20 µm angestrebt.

Bei der Anwendung der geträgerten Metallmembran als Gastrennmembran für Wasserstoff enthaltende Gasgemische kommt es infolge der stark schwankenden Betriebsbedingungen zu zeitlich variierenden Volumen- und Dimensionsänderungen der Membran durch die Einlagerung und Freisetzung von Wasserstoff und durch Temperaturwechsel. Die Dimensionsänderungen der Metallmembran sollten dabei in etwa derselben Größenordnung wie die der Membranträger liegen. Bezogen auf temperaturbedingte Volumen- und Dimensionsänderungen heißt dies, daß bevorzugt Metallverbundsysteme (Metallmembran auf einem metallischen Membranträger) eingesetzt werden, da hier die thermischen Ausdehnungskoeffizienten der Verbundmaterialien gegenüber heterogenen Metall-Keramik-Verbundsystemen (Metallmembran auf einem keramischen Membranträger) geringere Unterschiede aufweisen.

Von den oben erwähnten Membranmaterialien PdAg23, PdCu40 oder PdY10 weist PdAg23 wesentlich stärkere Dimensions- und Volumenänderungen bei der Wasserstoffeinlagerung auf als PdCu40. Für die Wasserstoffreinigung wird daher bevorzugt eine Metallmembran aus PdCu40 auf einem Membranträger aus AgCu verwendet.

Häufig ist es von Vorteil, die Metallmembran mehrschichtig aufzubauen. In diesem Fall ist es möglich, die erste, direkt auf dem Membranträger liegende Schicht als Diffusionsbarriere auszubilden. Die Diffusionsbarriere soll insbesondere bei metallischen Membranträgern verhindern, daß beim Betrieb der geträgerten Metallmembran keine Veränderung der Legierungszusammensetzung der Metallmembran durch Diffusion von Legierungsbestandteilen in die Membran hinein oder aus der Membran heraus erfolgt. Eine derartige Veränderung der Legierungszusammensetzung kann die Permeationsfähigkeit der Metallmembran erheblich beeinflussen. Als Diffusionsbarriere eignen sich keramische Oxide wie zum Beispiel Aluminiumoxid, Titandioxid und Ceroxid. Alternativ zu oxidischen Diffusionsbarrieren können auch Schichten aus Metallen wie Vanadium, Tantal oder Niob eingesetzt werden, die eine gute Permeabilität für Wasserstoff aufweisen. Die Dicke dieser Schichten sollte im Falle der Oxide nicht größer als 0,5 µm und im Falle der Metalle nicht größer als 2 µm sein. Bevorzugt ist in beiden Fällen die Dicke der Schichten nicht größer als 0,1 µm.

Bei Einsatz der geträgerten Metallmembran zur Reinigung von Reformatgas kann es zweckmäßig sein, die geträgerte Metallmembran mit einem Katalysator zu kombinieren. Zu diesem Zweck kann auf den porösen Membranträger auf der der Metallmembran abgewandten Seite eine katalytisch wirksame Beschichtung aufgebracht werden. Alternativ dazu kann anstelle der katalytischen Beschichtung auch eine funktionelle Schicht zum Gettern von Verunreinigungen und Schadstoffen aufgebracht werden.

Die erfindungsgemäße, geträgerte Metallmembran wird bevorzugt für die Abtrennung von Wasserstoff aus Gasgemischen, insbesondere aus Reformatgasen, eingesetzt. Die Erfindung erlaubt die Herstellung von geträgerten Metallmembranen, die Membranträger mit bisher nicht realisierbarer, hoher Porosität (mittlere Porengröße und Porenvolumen) aufweisen. Bei Dicken der Gastrennmembran von 0,3 bis 5, bevorzugt von 0,5 bis 3 µm, weist der Membranträger eine mittlere Porengröße größer als 0,5 und kleiner als 10 µm auf. Erstmalig wird hier also eine geträgerte Metallmembran beschrieben, bei der die mittlere Porengröße des Membranträgers größer ist als die Dicke der Metallmembran. Sie weist daher hervorragende Wasserstoffpermeationsleistungen auf.

In der Regel wird die geträgerte Metallmembran in Form ebener Folien verwendet Die Metallmembran kann jedoch auch in Form verschiedenartiger, geometrischer Strukturen hergestellt werden, die zusätzlich den Vorteil haben, daß ihre mechanische Stabilität wesentlich besser,ist als die einer ebenen Membran gleicher Wandstärke. Insbesondere kann die geträgerte Metallmembran auch in Form dünner Röhrchen hergestellt werden.

Die Erfindung wird an Hand der Figuren 1 bis 6 und an Hand der folgenden Beispiele näher erläutert. Es zeigen:
- **Figur 1:**: Idealisierter Querschnitt durch eine erfindungsgemäße, geträgerte Metallmembran vor dem Entfernen der Hilfssubstanz aus den Poren des Membrantärgers
- **Figur 2:**: Idealisierter Querschnitt durch eine erfindungsgemäße, geträgerte Metallmembran nach dem Entfernen der Hilfssubstanz aus den Poren des Membrantärgers
- **Figur 3:**: Idealisierter Querschnitt durch eine erfindungsgemäße, geträgerte Metallmembran mit einer Diffusionsbarriere zwischen Metallmembran und Membanträger
- **Figur 4:**: Idealisierter Querschnitt durch eine erfindungsgemäße, geträgerte Metallmembran mit einer Diffusionsbarriere zwischen Metallmembran und Membranträger und mit einer katalytischen Beschichtung des Membranträgers auf der der Metallmembran abgewandten Seite des Membranträgers
- **Figur 5:**: Querschliff durch eine erfindungsgemäße, geträgerte PdAg-Membran auf einem Membranträger aus AgCu
- **Figur 6:**: Poröse Trägerstruktur eines Membranträgers aus einer eutektischen AgCu-Legierung nach Herauslösen der kupferreichen Phase.

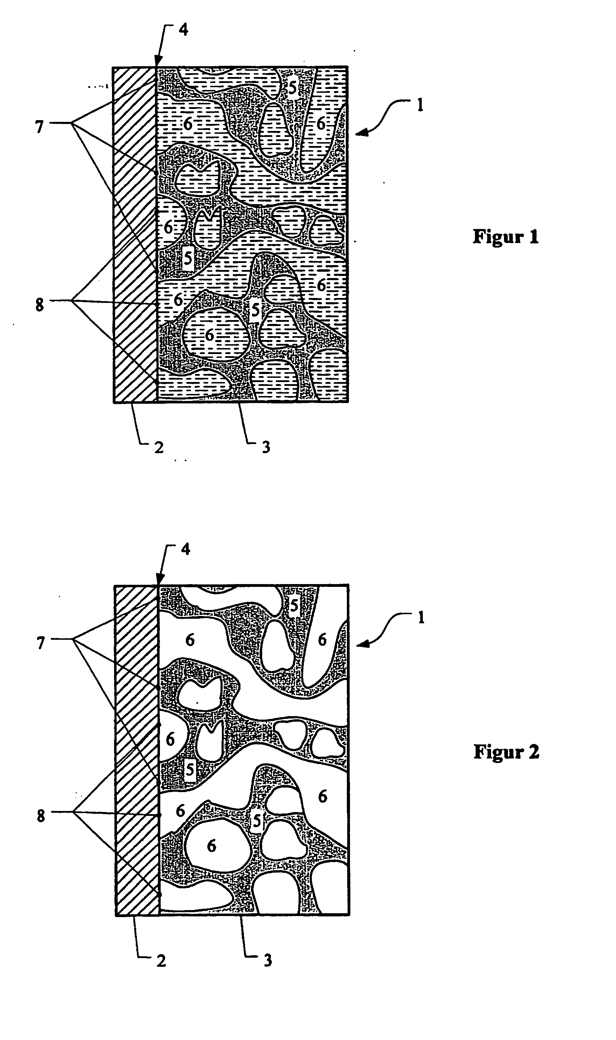

Figur 1 zeigt eine idealisierte Darstellung eines Querschnitts durch eine erfindungsgemaße, geträgerte Metallmembran vor dem Herauslösen der Hilfssubstanz aus den Poren des Membranträgers. (1) bezeichnet die Metallverbundmembran, das heißt den Verbund aus Metallmembran (2) und Membranträger (3). Die Oberfläche des Membranträgers an der Grenzfläche zwischen Metallmembran und Membranträger ist die Trägerfläche (4). Sie setzt sich aus verschiedenen Flächenanteilen zusammen, nämlich aus Anteilen (7), die vom Membranträgermaterial (5) und Anteilen (8), die von den mit der Hilfssubstanz verschlossenen Poren (6) in der Ebene der Trägerfläche gebildet werden. Die Flächenanteile (8) sind die schon zuvor als Kontaktflächen bezeichneten Flächen des Membranträgers.

Figur 2 zeigt die Verhältnisse von Figur 1 nach Herauslösen der Hilfssubstanz.

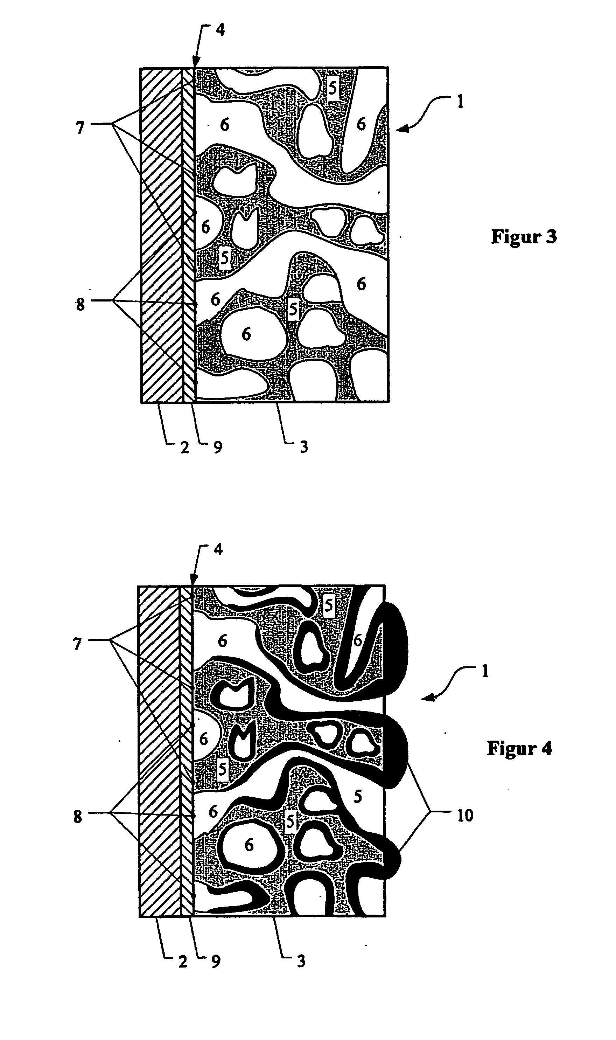

Während des Betriebs der Membran als Gastrennmembran bei der Reinigung von Wasserstoff kann es zu einer Diffusion des Materials des Membranträgers in die Metallmembran (2) kommen und zu einer unerwünschten Verringerung der Permeabilität der Metallmembran für Wasserstoff führen. Zur Verminderung dieser Diffusion kann zwischen der Metallmembran (2) und dem Membranträger (3) eine diffusionshemmende Barriere (9) eingefügt werden. Figur 3 zeigt eine solche Anordnung. Geeignete Materialien für die Diffusionsbarriere sind die schon oben genannten keramischen Oxide wie zum Beispiel Aluminiumoxid, Titandioxid und Ceroxid und Schichten aus den Metallen Vanadium, Tantal oder Niob.

Figur 4 zeigt eine Ausführungsform der erfindungsgemäßen Metallverbundmembran, bei der der Membranträger auf der der Metallmembran abgewandten Fläche mit einer Funktionsschicht (10) beschichtet ist. Hierbei kann es sich um eine katalytische Schicht zur CO Konvertierung (Wassergas Shift), Oxidation von Kohlenmonoxid oder um eine Schwefelspezies (z.B. Schwefelwasserstoff) absorbierende Schicht handeln.

### Beispiel 1:

Auf 50 µm dicken Folien aus AgCu28 wurden durch galvanische Abscheidung dünne Pd-Schichten mit Schichtdicken von 0,5, 1 und 2 µm hergestellt.

Nach einer Wärmebehandlung der beschichteten Folien unter Schutzgas (Argon) bei 600 °C für die Dauer von 30 min wurde die Cu-reiche Phase aus dem AgCu28-Legierungsmaterial der Membranträger herausgelöst. Das Herauslösen erfolgte anodisch in einem schwefelsauren Elektrolyten mit 10%-iger Schwefelsäure im potentiostatischen Betrieb bei 40 °C und konstant 230 mV Badspannung innerhalb von 20 Stunden. Dadurch wurde eine offene Porenstruktur in der Membranträgerfolie erzeugt.

Metallographische Untersuchungen und Aufnahmen mit einem Rasterelektronenmikroskop über den Querschnitt der fertiggestellten, geträgerten Metallmembran zeigten fest haftende, dichte Pd-Membranen auf einer porösen AgCu-Trägerschicht mit durchgehender Porosität und einer Porengröße von 1 bis 5 µm.

### Beispiel 2:

Auf eine Folie aus AgCu28 wurde durch Kathodenzerstäubung von einem PdAg23-Target eine 2 µm dicke PdAg23-Schicht aufgebracht.

Nach einer Wärmebehandlung der beschichteten Folie unter Schutzgas (Argon) bei 600 °C für die Dauer von 30 min wurde die Cu-reiche Phase aus dem AgCu28-Legierungsmaterial des Membranträgers herausgelöst. Das Herauslösen erfolgte anodisch in einem schwefelsauren Elektrolyten mit 10%-iger Schwefelsäure im potentiostatischen Betrieb bei 40 °C und konstant 230 mV Badspannung innerhalb von 20 Stunden. Dadurch wurde eine offene Porenstruktur in der Membranträgerfolie erzeugt.

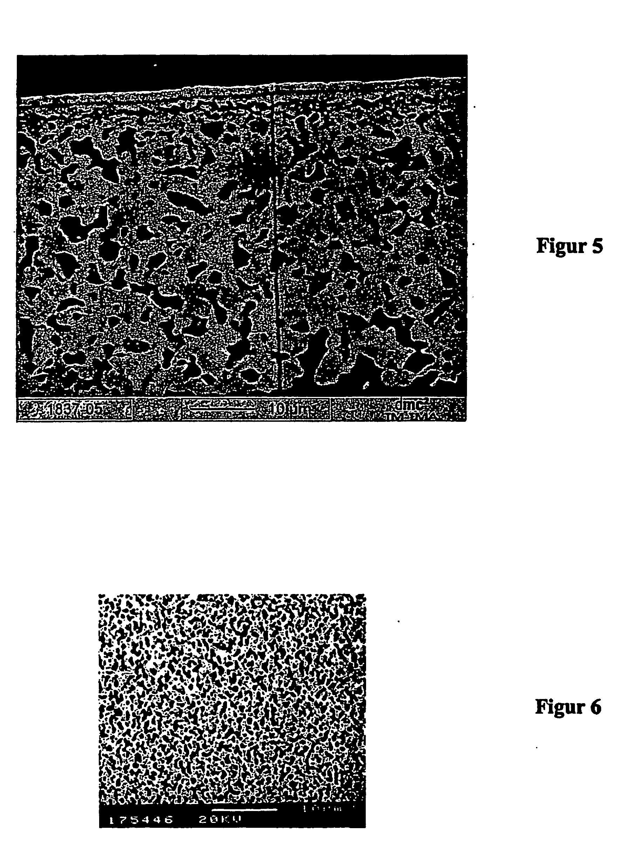

Figur 5 zeigt die rasterelektronenmikroskopische Aufnahme eines Querschliffs durch die so hergestellte Metallverbundmembran nach Herauslösen der kupferreichen Phase aus dem Membranträger. Es ist deutlich die grobporige Struktur des Membranträgers erkennbar. Die mittlere Größe der Poren ist größer als die Dicke der Metallmembran. Die Metallmembran weist eine Ebenheit auf, die nicht erreichbar gewesen wäre, wenn sie auf einen schon mit Poren versehenen Membranträger aufgebracht worden wäre. Der mittlere Porendurchmesser nimmt mit zunehmender Entfernung von der Metallmembran zu und ist an der der Metallmembran abgewandten Oberfläche des Membranträgers am größten. Diese Gradientenstruktur ist bedingt durch die oben beschriebene Art des anodischen Herauslösens der kupferreichen Phase des Trägers.

### Beispiel 3:

Es wurde aus einer weiteren Membranträgerfolie aus AgCu28 wie in den Beispielen 1 und 2 die kupferreiche Phase aus der Folie herausgelöst. Die Membranträgerfolie wurde vor dem Herauslösen der kupferreichen Phase einer anderen Wärmebehandlung als in den Beispielen 1 und 2 unterworfen, um den Einfluß der Wärmebehandlung auf die Ausbildung der Porenstruktur zu untersuchen.

Figur 6 zeigt einen Querschliff durch die so behandelte Membranträgerfolie. Der mittlere Porendurchmesser der erzeugten Porenstruktur wesentlich kleiner als in Figur 5 und macht deutlich, daß die Porosität und die Porenstruktur des Membranträgers durch die Art der Herstellung des eutektischen Membranträgers aus AgCu28-Legierung beeinflußt werden kann. Grundsätzlich ist für die entstehende Porengröße entscheidend, wie die Abkühlbedingungen bei der Herstellung der AgCu28 Legierung gewählt werden, wie die thermomechanische Behandlung, das heißt z.B. das Auswalzen erfolgt, und wie lange die thermische Nachbehandlung dauert. Eine schnelle Abkühlung bei der Herstellung von AgCu28 bedingt eine geringe Phasengröße und damit letztlich einen kleinen Porendurchmesser im Membranträger; eine längere thermische Nachbehandlung der Folie nach der thermomechanischen Verformung führt zu einer Rekristallisation und damit zu einer Vergröberung der Phasendomänen, was letztlich zu einem größeren Porendurchmesser (wie in Beispiel 2) im Membranträger führt. Auch durch geringfügige Variation in der Gesamtzusammensetzung des aus verschiedenen Phasen (Ag-reich oder Cu-reich) bestehenden AgCu28 kann die Phasengröße und damit die spätere Porengröße beeinflußt werden. Diese Verfahren sind aber nicht Gegenstand dieser Patentschrift.

Wenn auch in den vorstehenden Beispielen nur Membranträger aus einer eutektischen AgCu28-Legierung eingesetzt wurden, so ist die Herstellung der erfindungsgemäßen Membran nicht auf solche Membranträger beschränkt. Wie schon vorstehend beschrieben, können auch poröse Membranträger eingesetzt werden, deren Poren vor dem Aufbringen der Metallmembran mit einer Hilfssubstanz verschlossen und erst danach wieder durch Herauslösen der Hilfssubstanz geöffnet werden.

## Patentansprüche

1. Geträgerte Metallmembran enthaltend eine Metallmembran aus einer Palladium-Legierung mit einer Dicke zwischen 0,3 und 5 µm auf einer Trägerfläche eines porösen Membranträgers,
**dadurch gekennzeichnet,**
**daß** der Membranträger aus einer mehrphasigen, eutektischen AgCu-Legierung besteht und seine mittlere Porengröße zwischen 0,5 und 10 µm liegt.

2. Geträgerte Metallmembran nach Anspruch 1,
**dadurch gekennzeichnet,**
**dass** die mittlere Porengröße des Membranträgers größer ist als die Dicke der Metallmembran.

3. Geträgerte Metallmembran nach Anspruch 1,
**dadurch gekennzeichnet,**
**daß** die Metallmembran als mehrschichtige Membran ausgeführt ist.

4. Getragene Metallmembran nach Anspruch 1,
**dadurch gekennzeichnet,**
**daß** die Metallmembran eine PdAg23, PdCu40 oder PdY10-Legierung enthält.

5. Geträgerte Metallmembran nach Anspruch 1,
**dadurch gekennzeichnet,**
**daß** zwischen Metallmembran und Membranträger eine als Diffusionsbarriere wirkende Schicht angeordnet ist.

6. Geträgerte Metallmembran nach Anspruch 1,
**dadurch gekennzeichnet,**
**daß** sie als Folie oder Röhrchen ausgeführt ist.

7. Geträgerte Metallmembran nach Anspruch 1,
**dadurch gekennzeichnet,**
**daß** der Membranträger in Form eines porösen Wabenkörpers vorliegt.

8. Geträgerte Metallmembran nach Anspruch 1,
**dadurch gekennzeichnet,**
**daß** auf den porösen Membranträger auf der der Metallmembran abgewandten Seite eine katalytisch wirksame Beschichtung aufgebracht ist.

9. Getragene Metallmembran nach Anspruch 1,
**dadurch gekennzeichnet,**
**daß** auf den porösen Membranträger auf der der Metallmembran abgewandten Seite eine funktionelle Schicht zum Gettern von Verunreinigungen und Schadstoffen aufgebracht ist.

10. Verwendung einer geträgerten Metallmembran nach einem der vorhergehenden Ansprüche zur Abtrennung von Wasserstoff aus Gasgemischen.

11. Verfahren zur Herstellung einer geträgerten Metallmembran nach Anspruch 1,
**dadurch gekennzeichnet,**
**daß** das Verfahren die folgenden Schritte umfaßt:
a) Reinigen der Trägerfläche des Membranträgers,
b) Aufbringen der Metallmembran auf die Trägerfläche,
c) Behandeln des Verbundes aus Metallmembran und Membranträger bei Temperaturen zwischen 300 und 700°C und
d) elektrochemisches Herauslösen der unedleren Phase des Membranträgers.

## Claims

1. A supported metal membrane comprising a metal membrane comprising a palladium alloy having a thickness of 0.3 µm to 5 µm on a support surface of a porous membrane support,
**characterized in that**
the membrane support consists of a multi-phase eutectic alloy AgCu and has an average pore size of between 0.5 µm and 10 µm.

2. The supported metal membrane according to claim 1,
**characterized in that**
the average pore size of the membrane support is greater than the thickness of the metal membrane.

3. The supported metal membrane according to claim 1,
**characterized in that**
the metal membrane is a multilayered membrane.

4. The supported metal membrane according to claim 1,
**characterized in that**
the metal membrane comprises an alloy PdAg23, PdCu40 or PdY10.

5. The supported metal membrane according to claim 1,
**characterized in that**
a layer acting as a diffusion barrier is arranged between the metal membrane and the membrane support.

6. The supported metal membrane according to claim 1,
**characterized in that**
it is a foil or a tubule.

7. The supported metal membrane according to claim 1,
**characterized in that**
the membrane support is present in the form of a porous honeycomb body.

8. The supported metal membrane according to claim 1,
**characterized in that**
a catalytically active coating is applied to the porous membrane support on the side of said support being opposite to the metal membrane.

9. The supported metal membrane according to claim 1,
**characterized in that**
a functional layer for getting impurities and harmful substances is applied to the porous membrane support on the side of said support being opposite to the metal membrane.

10. Use of a supported metal membrane according to any one of the preceding claims for separating hydrogen from gas mixtures.

11. A method for preparing a supported metal membrane according to claim 1,
**characterized in that**
the method comprises the following steps:
a) cleaning the support surface of the membrane support,
b) applying the metal membrane to the support surface,
c) treating the laminate of metal membrane and membrane support at temperatures between 300°C and 700°C and
d) electrochemically dissolving the more base phase of the membrane support.

## Revendications

1. Membrane métallique supportée comportant une membrane métallique en un alliage de palladium ayant une épaisseur comprise entre 0,3 et 5 µm sur une surface de support d'un support de membrane, poreux,
**caractérisée en ce que**
le support de membrane est formé d'un alliage eutectique (AgCu) à plusieurs phases et la taille moyenne de ses pores est comprise entre 0,5 et 10 µm.

2. Membrane métallique supportée selon la revendication 1,
**caractérisée en ce que**
la dimension moyenne des pores du support de membrane est supérieure à l'épaisseur de la membrane métallique.

3. Membrane métallique supportée selon la revendication 1,
**caractérisée en ce que**
la membrane métallique est une membrane à plusieurs couches.

4. Membrane métallique supportée selon la revendication 1,
**caractérisée en ce que**
la membrane métallique contient un alliage PdAg23, PdCu40 ou PdY10.

5. Membrane métallique supportée selon la revendication 1,
**caractérisée par**
une couche constituant une barrière de diffusion entre la membrane métallique et le support de membrane.

6. Membrane métallique supportée selon la revendication 1,
**caractérisée en ce qu'**
elle est réalisée sous la forme d'un film ou de petits tubes.

7. Membrane métallique supportée selon la revendication 1,
**caractérisée en ce que**
le support de membrane se présente sous la forme d'un corps poreux en nids d'abeille.

8. Membrane métallique supportée selon la revendication 1,
**caractérisée en ce que**
le côté du support de membrane poreux, à l'opposé de la membrane métallique, comporte un revêtement à effet catalytique.

9. Membrane métallique supportée selon la revendication 1,
**caractérisée en ce que**
le côté du support de membrane poreux, à l'opposé de la membrane métallique, présente une couche fonctionnelle pour piéger les impuretés et les matières nocives.

10. Application d'une membrane métallique supportée selon l'une des revendications précédentes pour séparer l'hydrogène de mélanges gazeux.

11. Procédé de fabrication d'une membrane métallique supportée selon la revendication 1,
**caractérisé par** les étapes de procédé suivantes :
a) on nettoie la surface porteuse du support de membrane,
b) on applique la membrane métallique sur la surface porteuse,
c) on traite la combinaison formée de la membrane métallique et du support de membrane à des températures comprises entre 300 et 700°C, et
d) on dégage d'une manière électrochimique la phase non noble du support de membrane.
